# EUROPEAN PATENT SPECIFICATION

(11) **EP 0 312 502 B1**
(45) Date of publication and mention of the grant of the patent: **06.07.1994**
(21) Application number: 88810707.5
(22) Date of filing: 17.10.1988
(51) Int. Cl.: C07C 237/04, A01N 37/46

(54) **Dipeptides useful as plant growth regulators**
Dipeptide, verwendbar als Pflanzenwachstumsregulatoren
Dipeptides utilisables comme régulateurs de croissance de plantes

(30) Priority: 16.10.1987 JP 262437/87
(43) Date of publication of application: 19.04.1989
(73) Proprietor: NIPPON ZOKI PHARMACEUTICAL CO. LTD., Osaka-shi Osaka-fu (JP)
(72) Inventor: Yamamoto, Atsushi c/o Inst. of Bio-Active Science, Yashiro-cho Katoh-gun Hyogo (JP); Ienaga, Kazuharu c/o Inst. of Bio-Active Science, Yashiro-cho Katoh-gun Hyogo (JP); Higashiura, Kunihiko c/o Inst. Bio-Active Science, Yashiro-cho Katoh-gun Hyogo (JP); Kurohashi, Masaharu c/o Inst. Bio-Active Science, Yashiro-cho Katoh-gun Hyogo (JP)
(74) Representative: Kerr, Andrew

(56) References cited:
- EP-A- 0 194 679
- US-A- 4 735 651
- JOURNAL OF MEDICINAL CHEMISTRY, vol. 29, pages 1872-1876, October 1986; A. ROSOWSKY et al.: "Methoxetrate analogues. 29. Effect or gamma-aminobutyric acid spacers between the pteroyl and glutamate moieties on enzyme binding and cell growth inhibition"

## Description

The present invention relates to dipeptides and salts thereof which are useful as plant growth regulators.

Many attempts have been made to increase the yield of agricultural products. It is also important to prevent a decrease in agricultural yields resulting from abnormal environments. There is thus a need for compounds inducing resistance in plants against certain kinds of stress, for example, for compounds having a normalizing effect on the germination of low-temperature stressed plants. Certain dipeptides having excellent plant growth regulating properties have accordingly been found.

Rosowsky et al. in Journal of Medicinal Chemistry, vol. 29, pages 1872-1876 disclose the use as preparative intermediates of (O-t-Bu)₂ derivatives of GABA-Glu.

The novel dipeptides of the present invention have the following formula (I): 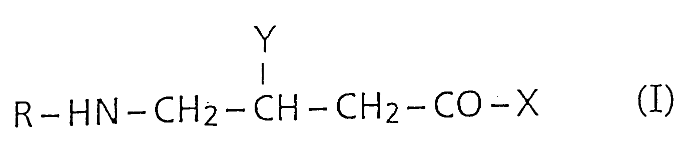
wherein R represents a hydrogen atom or an amino-protecting group, Y represents a hydrogen atom, a hydroxy group or a protected hydroxy group, and X represents an acidic amino acid residue or a protected acidic amino acid residue having at least one protecting group provided that (O-t-Bu)₂ derivatives of GABA-Glu are excluded.

Dipeptides of formula I having no protecting group are preferred, i.e. compounds of formula I′ 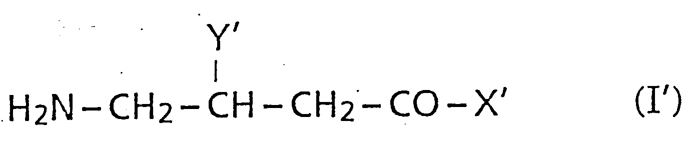
wherein Y′ represents a hydrogen atom or a hydroxy group,
and X′ represents an acidic amino acid residue;
or a horticulturally or agriculturally acceptable salt thereof.

The dipeptides and amino acids in the present application are described using the abbreviations adopted by IUPAC and IUB or by abbreviations commonly used in the art to which the present invention pertains.

For example, the following abbreviations are used.
- GABA:: γ-aminobutyric acid
- GABOB:: γ-amino-β-hydroxybutyric acid
- Glu:: glutamic acid
- Asp:: aspartic acid.

In the above formula (I), X represents an acidic amino acid residue such as Glu, D-Glu, Asp or D-Asp which may optionally be protected. Preferred dipeptides of the present invention include GABA-Glu, GABA-D-Glu, GABA-Asp, GABA-D-Asp, GABOB-Glu, GABOB-D-Glu, GABOB-Asp, GABOB-D-Asp and the like. Protecting groups for carboxy, amino or hydroxy groups are described in detail below.

The dipeptides according to the present invention can be produced by processes conventionally used in peptide chemistry. For example, solution methods or solid phase syntheses can be employed.

The coupling method for forming a peptide bond can include the azide method, active ester method, mixed acid anhydride method, acid chloride method, enzymatic coupling method, method employing a coupling reagent such as N,N′-dicyclohexylcarbodiimide (DCC), water-soluble carbodiimide (WSCD), N,N′-carbonyldiimidazole (CDI) and the like, or DCC-additive method wherein N-hydroxysuccinimide (HONSu), N-hydroxy-5-norbornene-2,3-di-carboxyimide (HONB), 1-hydroxybenzotriazole (HOBt) and the like can be employed as the additive.

An amino acid having an appropriate substituent group conventionally used in peptide chemistry can be employed as the starting material. Any side-chain groups and amino groups which do not participate in the reaction can be protected in a conventional manner, or any carboxy group or amino group which participates in the reaction can be activated.

Protecting group for the amino group not participating in the condensation reaction, which may be used include protecting groups conventionally employed in peptide synthesis chemistry e.g. a lower alkoxycarbonyl group such as t-butoxycarbonyl or t-pentoxycarbonyl group, an aralkyloxycarbonyl group such as benzyloxycarbonyl group, or an aralkyloxycarbonyl group having substituents such as o-chlorobenzyloxycarbonyl, p-nitrobenzyloxycarbonyl or p-methoxybenzyloxycarbonyl can be employed.

Protecting groups for the carboxy groups of acidic amino acids such as the glutamic acid or aspartic acid residue which may be used include protecting group conventionally employed in peptide synthesis chemistry e.g. an aralkyloxy group such as a benzyloxy group, an aralkyloxy group having a substituent such as t-butoxy or t-pentoxy group, cycloalkyloxy group such as cyclopentyloxy or cyclohexyloxy group, or pyridyloxy group and the like.

The hydroxy group of GABOB may be optionally substituted by a hydroxy-protecting group conventionally employed in peptide synthesis chemistry, i.e. an aralkyl group such as a benzyl group, a substituted aralkyl group having a substituent such as a bromobenzyl or a chlorobenzyl group, or a lower alkyl group such as t-butyl and the like.

These substituents can be removed by conventional methods such as catalytic reduction, acidolysis, etc.

In the above-mentioned coupling reaction and reaction removing substituents, the reaction temperature, reaction time and solvent used can be appropriately determined according to conditions in conventional peptide syntheses.

The dipeptides of the present invention also include pharmaceutically acceptable salts of the compounds of the above formula (I) with alkali metal such as sodium, potassium, with alkaline earth metals such as calcium or barium, with other metals such as aluminium and the like, or with ammonia or organic amines.

These dipeptides of this invention can include their metal complexes, for example complexes with zinc, nickel, cobalt, copper, iron, etc.

These salts and metal complexes can be produced from free dipeptides in the usual way or can be interchanged with each other.

The amino acid residue in the present invention may be any of the D-isomer, L-isomer and DL-isomer.

The following examples, which are illustrative only and not intended to limit the scope of the invention, describe the preparation of compounds of the present invention. The NMR was measured using t-butanol (δ=1.23 ppm) as the internal standard and expressed in the δ value, and the specific rotatory power was measured using a sodium lamp (λ=5893 Å)

In these examples, the following abbreviations of substituents or reagents are used.
Z: Benzyloxycarbonyl
OBzl: Benzyloxy
TosOH: Toluene sulfonic acid
EDC-HCL: 1-Ethyl-3-(3′-dimethylaminopropyl)carbodiimidehydrochloride

### Example 1.

(i) In 250 ml of dichloromethane, 11.9 g of Z-GABA-OH, 26.5 g of TosOH·Glu(OBzl)-OBzl and 5.36 g of triethylamine were dissolved. 53 mmol of EDC·HCL was added to the solution in ice-cold water, and the reaction mixture was stirred for 2 hrs at 0°C and 20 hrs at room temperature. After the solvent was distilled off under reduced pressure, the residue was dissolved in a mixture of ethyl acetate and water, and the organic layer was separated. Ethyl acetate was aded to the aqueous layer and the organic layer was separated and combined with the layer of ethyl acetate obtained previously. The resulting organic layer was washed with 10% aqueous citric acid solution, water, 5% aqueous sodium hydrocarbonate solution and brine, and dried over anhydrous sodium sulfate. The solvent was distilled off under reduced pressure to give crude white crystals. the crystalline residue was purified using silica gel column chromatography (ethyl acetate/chloroform=1/1) to give 17.4 g of Z-GABA-Glu(OBzl)-OBzl.
Recovery: 64 %
m.p.: 94 - 95°C
[α]²⁰=+1.0 (c=1.0, CHCl₃)
In the same manner, the following compounds were obtained, Z-GABA-D-Glu(OBzl)-OBzl
Recovery: 69 %
m.p.: 92 - 93°C
[α]²⁰=-1.1 (c=1.0, CHCl₃)
Z-GABA-Asp(OBzl)-OBzl
Recovery: 70 %
m.p.: 105 - 106°C
[α]²⁰=+15.4 (c=1.0, CHCl₃)
Z-GABA-D-Asp(OBzl)-OBzl
Recovery: 70%
m.p.: 104 - 106°C
[α] ²⁰=-15.9 (c=1.0, CHCl₃)
Z-DL-GABOB-Glu(OBzl)-OBzl
Recovery: 62 %
(2) In a mixture of 200 ml of methanol, 50 ml of acetone and 10 ml of water, 17.4 g of Z-GABA-Glu(OBzl)-OBzl was dissolved, and hydrogenated in the presence of 10 % palladium-carbon catalyst in a stream of hydrogen at atmospheric pressure at room temperature. After 20 hrs. the disappearance of the starting material was determined by the use of thin layer chromatography. The catalyst was filtered off and the solvent was distilled off under reduced pressure. Water and toluene were added to the oily residue and the remaining acetic acid was evaporated off together with the solvent under reduced pressure. The oily residue was crystallized from a mixture of water and ethanol to give 6.6 g of GABA-Glu (Compound 1) in the form of a white powder.
Recovery: 89 %
m.p.: 178 - 180°C
[α]²⁰=-4.9 (c=1.0, H₂O)

| Elementary Analysis: C₉H₁₆N₂O₅ 0. 2H₂O | | | |
|---|---|---|---|
| | C % | H % | N % |
| Calculated | 45.84 | 7.01 | 11.88 |
| Found | 46.02 | 7.30 | 11.75 |

NMR (0.1 NDCl/D₂O): δ=1.91-2.02(3H,m), 2.13-2.22(1H,m), 2.42(2H,t,J=7.5Hz), 2.13-2.22(1H,m) 2.42(2H,t,J=7.5Hz), 2.46(2H,t,J=7Hz), 3.02(2H,t,J=7.5Hz), 4.32(1H,dd,J=5, 9Hz)
In the same manner, the following compounds were obtained. GABA-D-Glu (compound 2)
Recovery: 86 %
m.p.: 175 - 176°C
[α]²⁰=+5.0 (c=1.0, H₂O)

| Elementary Analysis: C₉H₁₆N₂O₅ 0.2H₂O | | | |
|---|---|---|---|
| | C % | H % | N % |
| Calclated | 45.84 | 7.01 | 11.88 |
| Found | 45.84 | 7.11 | 11.70 |

NMR (0.1 NDCl/D₂O): δ=1.92-2.04(3H,m), 2.15-2.24(1H,m), 2.43(2H,t,J=7.5Hz), 2.48(2H,t,J=7.0Hz), 3.02(2H,t,J=7.5Hz), 4.37(1H,dd,J=5, 9Hz)
GABA-Asp (Compound 3)
Recovery: 92 %
m.p.: 184 - 185°C
[α]²⁰=+11.7 (c=1.0, H₂O)

| Elementary Analysis: C₈H₁₄N₂O₅ | | | |
|---|---|---|---|
| | C % | H % | N % |
| Calculated | 44.03 | 6.47 | 12.84 |
| Found | 44.13 | 6.79 | 12.50 |

NMR (0.1 NDCl/D₂O): δ=1.95(2H,tt,J=7.5, 7.5Hz), 2.43(2H,t,J=7.5Hz), 2.93(1H,dd,J=7, 17Hz), 2.98(1H,dd,J=5, 17Hz), 3.01(2H,t,J=7.5Hz). 4.77(1H,dd,5, 7Hz)
GABA-D-Asp (Compound 4)
Recovery: 89 %
m.p.: 180 - 182°C
[α]²⁰=-11.0 (c=1.0, H₂O)

| Elementary Analysis: C₈H₁₄N₂O₅ | | | |
|---|---|---|---|
| | C % | H % | N % |
| Calculated | 44.03 | 6.47 | 12.84 |
| Found | 43.98 | 6.67 | 12.62 |

NMR (0.1 HDCl/D₂O): δ=1.95(2H,tt,J=7.5, 7.5Hz), 2.42(2H,t,J=7.5Hz), 2.87(1H,dd,J=7, 17 Hz), 2.94(1H,dd,J=5, 17Hz), 3.10(2H,t,J=7.Hz), 4.69(1H,dd,J=5, 7Hz)
DL-GABOB-Glu (Compound 5)
NMR (0.1 NDCl/D₂O): =1.95-2.06(1H,m), 2.17-2.26(1H,m), 2.47-2.53(2H,m), 2.54-2.58(2H,m), 2.96-3.03(1H,m),. 3.16-3.22(1H,m), 4.23-4.31(1H,m), 4.40-4.46(1H,m)
The plant growth regulating effects of the compounds of the present invention are described below:

### 1. Rice germination test

A filter paper soaked with an aqueous solution of a test agent was laid in a germination dish. The germination dish was seeded with rise (Oryza sativa L. japonica). The seeds were treated with the aqueous solution of the test agent only during the germination period (4 days). The solution used was a 1 x 10⁻⁶M aqueous solution. Lengths and weights of both shoots and roots were measured 7 days after transplantation from the germination dish to a water culture vessel not containing any test drug. These tests were carried out in a dark room at 20°C and results of t-test between a control group and a test group are indicated thus; ***p<0.001, **p<0.01, *p<0.05; n=30. The results are shown in Table 1 and 2.

**Table 1**

| Test Agent | Shoot length (mm) | Root length (mm) |
|---|---|---|
| control | 44.9 +/- 0.98 | 49.2 +/- 2.70 |
| Compound 1 | 55.8 +/- 1.02*** | 61.5 +/- 2.83** |
| Compound 2 | 55.5 +/- 1.08*** | 55.2 +/- 4.67 |
| Compound 3 | 57.1 +/- 0.89*** | 63.3 +/- 3.32** |
| Compound 4 | 54.8 +/- 0.91*** | 66.8 +/- 3.34*** |

**Table 2**

| Test Agent | Shoot weight (mg) | Root weight (mg) |
|---|---|---|
| control | 21.4 +/- 0.58 | 23.6 +/- 1.89 |
| Compound 1 | 26.1 +/- 0.71*** | 30.8 +/- 1.23** |
| Compound 2 | 26.1 +/- 0.98** | 30.0 +/- 0.74* |
| Compound 3 | 25.2 +/- 0.77** | 24.6 +/- 1.28 |
| Compound 4 | 24.5 +/- 0.66** | 28.3 +/- 1.86 |

As shown by the above-mentioned results, the dipeptides of the present invention have excellent plant growth regulatory effects. Significant enhancing effects of the present dipeptides were observed on plant growth at low temperature (20°C), in comparison with the optimum temperature (30°C). Thus, the compounds of this invention have normalizing effects on the germination of low-temperature stressed plant.

The plant growth regulating effect of the dipeptides of the invention can be achieved by treating seeds with a solution of the plant growth regulating agent during germination. The dipeptide solution may be of any convenient concentration. A preferred concentration is from 1 x 10⁻⁶ M to 1 x 10 ⁻¹⁰ M solution.

## Claims

1. A dipeptide having the formula (I): 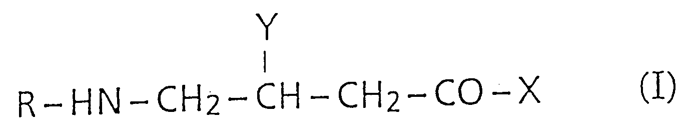 wherein R represents a hydrogen atom or an amino-protecting group, Y represents a hydrogen atom, a hydroxy group or a protected hydroxy group and X represents an acidic amino acid residue or a protected acidic amino acid residue having at least one protecting group;
or a horticulturally or agriculturally acceptable salt thereof provided that (O-t-Bu)₂ derivatives of GABA-Glu are excluded.

2. A dipeptide as claimed in claim 1 having the formula (I'): 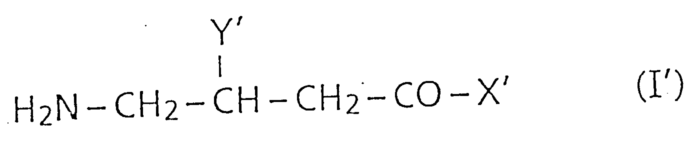 wherein Y' represents a hydrogen atom or a hydroxy group, and X' represents an acidic amino acid residue;
or a horticulturally or agriculturally acceptable salt thereof.

3. A dipeptide or a horticulturally or agriculturally acceptable salt thereof according to claim 1 or claim 2 wherein Y represents a hydrogen atom.

4. A dipeptide or a horticulturally or agriculturally acceptable salt thereof according to claim 2 wherein Y represents a hydroxy group.

5. A dipeptide or a horticulturally or agriculturally acceptable salt thereof according to claim 3 or claim 4 wherein X represents glutamic acid.

6. A dipeptide or a horticulturally or agriculturally acceptable salt thereof according to claim 3 or claim 4 wherein X represents aspartic acid.

7. A dipeptide according to claim 2 which is GABA-Glu, GABA-D-Glu, GABA-Asp, GABA-D-Asp, GABOB-Glu, GABOB-D-Glu, GABOB-Asp or GABOB-D-Asp or a horticulturally or agriculturally acceptable salt thereof.

8. A plant growth regulating composition comprising as an active ingredient an effective amount of at least one dipeptide of the formula (I) or a horticulturally or agriculturally acceptable salt thereof as defined in any one of the preceding claims.

9. A plant growth regulating composition as claimed in claim 8 having a concentration of from 1 x 10⁻⁶ to 1 x 10⁻¹⁰ M of dipeptide of form I or a horticulturally or agriculturally acceptable salt thereof.

10. A method of treating seeds with a dipeptide of the formula (I) or a horticulturally or agriculturally acceptable salt thereof as defined in any one of claims 1 to 7 or with a composition as claimed in claim 8 or claim 9.

11. A process for the preparation of a dipeptide of the formula (I) as defined in any one of claims 1 to 7 or a horticulturally or agriculturally acceptable salt thereof which comprises the steps of coupling γ-aminobutyric acid or γ-amino-β-hydroxybutyric acid which may optionally have a protecting group with an acidic amino acid which may optionally have a protecting group, and if desired, removing any protecting group and if desired converting said dipeptide into a horticulturally or agriculturally acceptable salt thereof.

12. A method as claimed in claim 10 wherein the seeds are rice seeds.

13. A process for the preparation of a dipeptide or a horticulturally or agriculturally acceptable salt thereof as claimed in any one of claims 1 to 7 which comprises removing a protecting group from a corresponding dipeptide having at least one protecting group.

## Patentansprüche

1. Dipeptid der Formel (I): 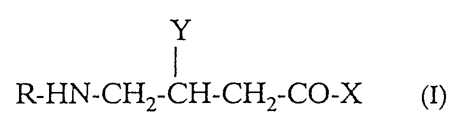 wobei R ein Wasserstoffatom oder eine Amino-Schutzgruppe bedeutet, Y ein Wasserstoffatom, eine Hydroxyl-Gruppe oder eine geschützte Hydroxyl-Gruppe bedeutet und X einen sauren Aminosäure-Rest oder einen geschützten sauren Aminosäure-Rest mit mindestens einer Schutzgruppe bedeutet;
oder ein für Gartenbau oder Landwirtschaft geeignetes Salz davon, wobei (O-t-Bu)₂-Derivate von GABA-Glu ausgenommen sind.

2. Dipeptid nach Anspruch 1 der Formel (I'): 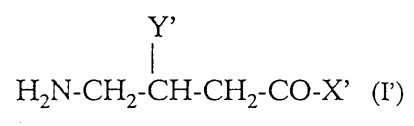 wobei Y' ein Wasserstoffatom oder eine Hydroxyl-Gruppe bedeutet, und X' einen sauren Aminosäure-Rest bedeutet;
oder ein für Gartenbau oder Landwirtschaft geeignetes Salz davon.

3. Dipeptid oder ein für Gartenbau oder Landwirtschaft geeignetes Salz davon nach Anspruch 1 oder 2, wobei Y ein Wasserstoffatom bedeutet.

4. Dipeptid oder ein für Gartenbau oder Landwirtschaft geeignetes Salz davon nach Anspruch 2, wobei Y eine Hydroxyl-Gruppe bedeutet.

5. Dipeptid oder ein für Gartenbau oder Landwirtschaft geeignetes Salz davon nach Anspruch 3 oder 4, wobei X Glutaminsäure bedeutet.

6. Dipeptid oder ein für Gartenbau oder Landwirtschaft geeignetes Salz davon nach Anspruch 3 oder 4, wobei X Asparaginsäure bedeutet.

7. Dipeptid nach Anspruch 2, das GABA-Glu, GABA-D-Glu, GABA-Asp, GABA-D-Asp, GABOB-Glu, GABOB-D-Glu, GABOB-Asp oder GABOB-D-Asp oder ein für Gartenbau oder Landwirtschaft geeignetes Salz davon ist.

8. Pflanzenwachstum-regulierende Zusammensetzung, die als einen aktiven Bestandteil eine wirksame Menge von mindestens einem Dipeptid der Formel (I) oder eines für Gartenbau oder Landwirtschaft geeigneten Salzes davon nach einem der vorhergehenden Ansprüche aufweist.

9. Pflanzenwachstum-regulierende Zusammensetzung nach Anspruch 8, die eine Konzentration von 1 x 10⁻⁶ bis 1 x 10⁻¹⁰ M des Dipeptids der Form I oder eines für Gartenbau oder Landwirtschaft geeigneten Salzes davon besitzt.

10. Verfahren zum Behandeln von Samen mit einem Dipeptid der Formel (I) oder eines für Gartenbau oder Landwirtschaft geeigneten Salzes davon nach einem der Ansprüche 1 - 7 oder mit einer Zusammensetzung nach Anspruch 8 oder 9.

11. Prozeß zur Herstellung eines Dipeptids der Formel (I) nach einem der Ansprüche 1 - 7 oder eines für Gartenbau oder Landwirtschaft geeigneten Salzes davon, der die folgenden Schritte aufweist: Verknüpfen von γ-Aminobuttersäure oder γ-Amino-B-β-Hydroxybuttersäure, die wahlweise eine Schutzgruppe besitzen, mit einer sauren Aminosäure, die wahlweise eine Schutzgruppe besitzt, und wenn erwünscht, Entfernen der Schutzgruppe, und wenn erwünscht, Umsetzen des Dipeptids in ein für Gartenbau oder Landwirtschaft geeignetes Salz davon.

12. Verfahren nach Anspruch 10, wobei die Samen Reissamen sind.

13. Prozeß zur Herstellung eines Dipeptids oder eines für Gartenbau oder Landwirtschaft geeigneten Salzes davon nach einem der Ansprüche 1 - 7, der aufweist: Entfernen einer Schutzgruppe vom entsprechenden Dipeptid, das mindestens eine Schutzgruppe besitzt.

## Revendications

1. Dipeptide répondant à la formule (I) : 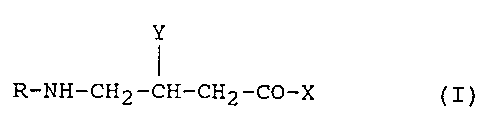 dans laquelle R représente l'atome d'hydrogène ou un groupe protecteur de la fonction amine, Y représente l'atome d'hydrogène, un groupe OH ou un groupe protecteur de la fonction OH, et X représente un reste aminoacide fonctionnellement acide ou un reste aminoacide fonctionnellement acide protégé ayant un moins un groupe protecteur ;
ou l'un de ses sels acceptables en horticulture ou agriculture avec la condition que les dérivés (O-t.-Bu)₂ de GABA-Glu sont exclus.

2. Dipeptide suivant la revendication 1, répondant à la formule (I') : 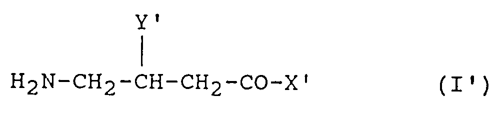 dans laquelle Y' représente l'atome d'hydrogène ou un groupe OH, et X' représente un reste aminoacide fonctionnellement acide ;
ou l'un de ses sels acceptables en horticulture ou agriculture.

3. Dipeptide ou l'un de ses sels acceptables en horticulture ou agriculture suivant la revendication 1 ou 2, dans lequel Y représente l'atome d'hydrogène.

4. Dipeptide ou l'un de ses sels acceptables en horticulture ou agriculture suivant la revendication 2, dans lequel Y représente un groupe hydroxy.

5. Dipeptide ou l'un de ses sels acceptables en horticulture ou agriculture suivant la revendication 3 ou 4, dans lequel X représente l'acide glutamique.

6. Dipeptide ou l'un de ses sels acceptables en horticulture ou agriculture suivant la revendication 3 ou 4, dans lequel X représente l'acide aspartique.

7. Dipeptide selon la revendication 2, caractérisé en ce qu'il s'agit de GABA-Glu, GABA-D-Glu, GABA-Asp, GABA-D-Asp, GABOB-Glu, GABOB-D-Glu, GABOB-Asp, GABOB-D-Asp, ou un de leurs sels acceptables en horticulture ou en agriculture.

8. Composition pour réguler la croissance d'une plante, ladite composition comprenant en tant qu'ingrédient actif une quantité efficace d'au moins un dipeptide de formule (I) ou l'un de ses sels acceptables en horticulture ou en agriculture suivant l'une quelconque des revendications précédentes.

9. Composition pour réguler la croissance d'une plante suivant la revendication 8, ladite composition ayant une concentration de 1 x 10⁻⁶ à 1 x 10⁻¹⁰ M d'un dipeptide de formule I ou de l'un de ses sels acceptables en horticulture ou en agriculture.

10. Procédé pour le traitement de semences avec un dipeptide de formule (I) ou de l'un de ses sels acceptables en horticulture ou en agriculture selon l'une quelconque des revendications 1 à 7, ou avec une composition suivant la revendication 8 ou 9.

11. Procédé pour la préparation d'un dipeptide de formule (I) suivant l'une quelconque des revendications 1 à 7, ou de l'un de ses sels acceptables en horticulture ou en agriculture, ledit procédé comprenant l'étape de couplage de l'acide γ-aminobutyrique ou de l'acide γ-amino-β-hydroxybutyrique pouvant le cas échéant présenter un groupe protecteur, avec un amino-acide fonctionnellement acide qui peut le cas échéant présenter un groupe protecteur et, si nécessaire, d'élimination de tout groupe protecteur et, si nécessaire, de conversion dudit dipeptide en l'un de ses sels acceptables en horticulture ou en agriculture.

12. Procédé suivant la revendication 10, dans lequel les semences sont des semences de riz .

13. Procédé pour la préparation d'un dipeptide ou de l'un de ses sels acceptables en horticulture ou en agriculture suivant l'une quelconque des revendications 1 à 7, ledit procédé comprenant l'élimination d'un groupe protecteur d'un dipeptide correspondant ayant au moins un groupe protecteur.
